# EUROPÄISCHE PATENTANMELDUNG

(11) **EP 1 332 905 A2**
(43) Veröffentlichungstag der Anmeldung: **06.08.2003**
(21) Anmeldenummer: 03002392.3
(22) Anmeldetag: 04.02.2003
(51) Int. Cl.: B60J 7/06

(54) **Kraftfahrzeug mit einem zu öffnenden Fahrzeugdach und Verfahren zum Öffnen desselben**

(30) Priorität: 05.02.2002 DE 10204666
(71) Anmelder: Webasto Vehicle Systems International GmbH, 82131 Stockdorf (DE)
(72) Erfinder: Albert, Jean Paul, 79700 Saint Pierre des Echaubrognes (FR); De Gaillard, Francois, 85390 Mouilleron en Pareds (FR); Pocchiola, Sergio Viter, 10070 Mezzenile (TO) (IT); Sumida, Koii, Hiroshima City, 739-1414 (JP); Ueki, Sigeru, 379-2115 Higashihiroshima-City (JP)
(74) Vertreter: Bedenbecker, Markus

(57) **Zusammenfassung**

Die Erfindung betrifft ein Kraftfahrzeug mit einem zu öffnenden Fahrzeugdach, mit einer Karosserie (12), die eine Fahrgastzelle (14) bildet, die an ihrem vorderen und hinteren Ende von einer Frontscheibe (16) und einem Heckscheibenelement (18) begrenzt wird und an deren Seiten sich vom vorderen zum hinteren Ende karosseriefeste Dachlängsholme (20) erstrecken, wobei die Dachlängsholme (20), eine Oberkante (38) der Frontscheibe (16) und eine Oberkante (34) des Heckscheibenelements (18) eine Dachöffnung (26) einschließen, und mit einem faltbaren Verdeck (28) zum wahlweisen Öffnen und Schließen der Dachöffnung (26).

Erfindungsgemäß ist vorgesehen, dass das Heckscheibenelement (18) an seiner Oberkante (34) mit dem faltbaren Verdeck (28) verbunden ist und an seiner Unterkante (36) um diese Kante (36) schwenkbar an der Karosserie (12) angebracht ist.

## Beschreibung

Die Erfindung betrifft ein Kraftfahrzeug mit einem zu öffnenden Fahrzeugdach, mit einer Karosserie, die eine Fahrgastzelle bildet, die an ihrem vorderen und hinteren Ende von einer Frontscheibe und einem Heckscheibenelement begrenzt wird und an deren Seiten sich vom vorderen zum hinteren Ende karosseriefeste Dachlängsholme erstrecken, wobei die Dachlängsholme, eine Oberkante der Frontscheibe und eine Oberkante des Heckscheibenelements eine Dachöffnung einschließen, und mit einem faltbaren Verdeck zum wahlweisen Öffnen und Schließen der Dachöffnung.

Die Erfindung betrifft weiter ein Verfahren zum Öffnen eines Fahrzeugdachs eines gattungsgemäßen Kraftfahrzeugs.

Ein gattungsgemäßes Kraftfahrzeug ist beispielsweise aus der deutschen Patentschrift DE 196 38 846 C2 bekannt. Dort ist ein Stoffverdeck in zwei Abschnitte aufgeteilt, so dass ein vorderer Abschnitt von der Frontscheibe bis zu einem hinteren Dachknick verläuft und sich ein hinterer Abschnitt, welcher eine Heckscheibe enthält, von dem hinteren Dachknick bis zu einer Brüstung der Karosserie erstreckt. Die beiden Abschnitte können separat geöffnet werden. Wird das Verdeck vollständig geöffnet, werden beide Abschnitte des Stoffverdecks in einen entsprechenden Aufnahmeschacht unter der Brüstung versenkt.

Allerdings ist bei dieser Gestaltung des Fahrzeugdaches ein aufwändiger Öffnungsmechanismus für das Öffnen und Versenken der beiden Abschnitte erforderlich. Auch ist die Behandlung der Heckscheibe kompliziert. Ist die Heckscheibe selbst faltbar, so führt der Faltknick in der Heckscheibe zu Beeinträchtigungen der Sicht und der Lebensdauer der Scheibe. Ist die Heckscheibe starr, stellt sie Einschränkungen an die Art der Faltung des gesamten Stoffverdecks.

Der Erfindung liegt die **Aufgabe** zugrunde, ein gattungsgemäßes Kraftfahrzeug derart weiterzubilden, dass die vorstehend erläuterten Probleme vermieden oder zumindest verringert werden, insbesondere ein gattungsgemäßes Kraftfahrzeug mit einer einfachen und unkomplizierten Öffnungsfunktion zum Öffnen des Fahrzeugdachs bereitzustellen.

Diese Aufgabe wird durch die Merkmale der unabhängigen Ansprüche 1 und 9 gelöst.

Vorteilhafte Ausgestaltungen und Weiterbildungen der Erfindung ergeben sich aus den abhängigen Ansprüchen.

Die Erfindung baut auf dem gattungsgemäßen Stand der Technik dadurch auf, dass das Heckscheibenelement an seiner Oberkante mit dem faltbaren Verdeck verbunden ist und an einer Unterkante um diese Kante schwenkbar an der Karosserie angebracht ist. Das Heckscheibenelement ist somit nicht in die Faltung des Verdecks eingebunden, so dass für seine Gestaltung ein größerer Freiraum besteht.

In bevorzugten Ausführungsformen des erfindungsgemäßen Kraftfahrzeugs ist vorgesehen, dass das Heckscheibenelement in die Fahrgastzelle schwenkbar ist, bevorzugt, dass es in einen hinter Vorder- oder Rücksitzen des Fahrzeugs angeordneten Stauraum schwenkbar ist. Dadurch kann das Heckscheibenelement in einfacher und platzsparender Weise verstaut werden. Ein aufwändiger Mechanismus für die Unterbringung ist nicht erforderlich.

In diesem Zusammenhang ist vorzugsweise ein Antrieb zum Öffnen und Schließen des Fahrzeugdaches vorgesehen, der so angeordnet und eingerichtet ist, dass er das faltbare Verdeck beim Öffnen faltet und auf die Außenfläche des Heckscheibenelements schiebt.

Insbesondere ist der Antrieb mit Vorteil angeordnet und eingerichtet, um nach Aufschieben des faltbaren Verdecks das Heckscheibenelement zusammen mit dem aufgeschobenen Verdeck in die Fahrgastzelle zu schwenken. Somit kann das Fahrzeugdach einschließlich des Heckscheibenbereichs vollständig geöffnet werden, ohne das Heckscheibenelement in die Faltung des Verdecks einzubeziehen. Vielmehr wirken die Faltung des Verdecks und die Verschwenkung des Heckscheibenelements zusammen, um beide Elemente gemeinsam in einfacher Weise platzsparend unterzubringen.

Dabei findet die Verschwenkung bevorzugt in eine solche Lage statt, dass nach der Verschwenkung des Heckscheibenelements in die Fahrgastzelle die rückwärtige Blickrichtung des Fahrers im Wesentlichen freigegeben ist.

In einer zweckmäßigen Ausgestaltung des erfindungsgemäßen Kraftfahrzeugs ist das Heckscheibenelement starr und bietet somit einen sicheren Halt für die Heckscheibe.

Bei einer besonders bevorzugten Weiterbildung des erfindungsgemäßen Kraftfahrzeugs ist vorgesehen, dass das Heckscheibenelement einen Heckscheibenrahmen enthält und eine Heckscheibe aus einem transparenten starren Material, insbesondere aus Glas. Dann kann beispielsweise eine Heizeinrichtung für die Heckscheibe problemlos integriert werden.

In einer weiteren zweckmäßigen Ausgestaltung des erfindungsgemäßen Kraftfahrzeugs ist das faltbare Verdeck ein Stoffverdeck.

Bei einem erfindungsgemäßen Verfahren zum Öffnen eines Fahrzeugdachs eines Kraftfahrzeugs der oben beschriebenen Art wird das faltbare Verdeck beim Öffnen gefaltet und auf die Außenfläche des Heckscheibenelements geschoben, und das Heckscheibenelement wird mit dem aufgeschobenen Verdeck in die Fahrgastzelle geschwenkt, so dass nach der Verschwenkung des Heckscheibenelements die rückwärtige Blickrichtung des Fahrers im Wesentlichen freigegeben wird.

Bevorzugt wird bei dem erfindungsgemäßen Verfahren das Falten des Verdecks, das Aufschieben auf das Heckscheibenelement und das Schwenken des Heckscheibenelements in die Fahrgastzelle durch einen elektrischen Antrieb bewirkt.

Der Erfindung liegt die Erkenntnis zugrunde, dass die Kombination eines Faltdaches mit einem ins Fahrzeuginnere schwenkbaren Heckscheibenelement einen besonders einfachen, preiswerten und robusten Öffnungsmechanismus für ein Fahrzeugdach, insbesondere bei einer Cabrio-Limousine ermöglicht.

Die Erfindung wird nun unter Bezugnahme auf die beigefügten Zeichnungen anhand einer bevorzugten Ausführungsform beispielhaft erläutert.

Es zeigen:
- Figur 1: ein Ausführungsbeispiel eines erfindungsgemäßen Kraftfahrzeugs mit geschlossenem Fahrzeugdach in perspektivischer Ansicht schräg von oben;
- Figur 2: das Kraftfahrzeug von Figur 1 bei vollständig geöffnetem Fahrzeugdach; und
- Figur 3: in (a) bis (d) in stark schematisierter Darstellung vier Arbeitsstellungen beim Öffnen des Fahrzeugdachs des Kraftfahrzeugs der Figuren 1 und 2.

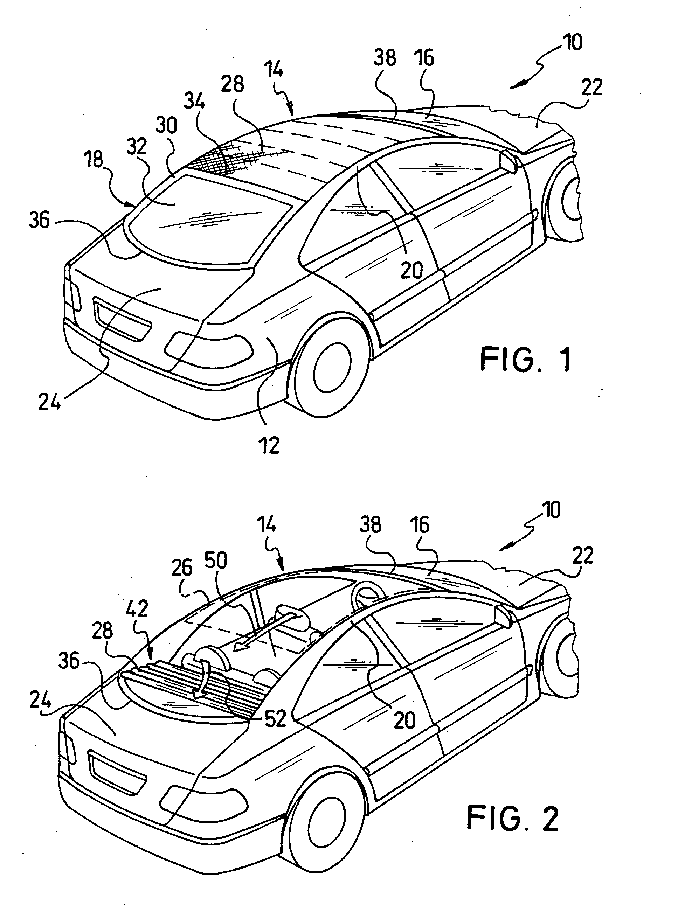

Die Figuren 1 und 2 zeigen den Dachbereich einer allgemein mit 10 bezeichneten viertürigen Cabrio-Limousine in perspektivischer Ansicht schräg von oben. Die Cabrio-Limousine 10 weist eine Karosserie 12 auf, die eine Fahrgastzelle 14 bildet. Die Fahrgastzelle 14 wird an ihrem vorderen Ende von einer Frontscheibe 16 und an ihrem hinteren Ende von einem Heckscheibenelement 18 begrenzt. Entlang der Seiten der Fahrgastzelle 14 erstrecken sich Dachlängsholme 20, die von der in den Figuren nur teilweise dargestellten Frontpartie 22 der Karosserie 12 bis zur Heckpartie 24 der Karosserie 12 reichen.

Die Dachlängsholme 20, die Oberkante 38 der Frontscheibe 16 und die Oberkante 34 des Heckscheibenelements 18 schließen eine Dachöffnung 26 ein, die in der Darstellung der Figur 2 durch gestrichelte Linien angedeutet ist. Die Dachöffnung 26 ist durch ein faltbares Stoffverdeck 28 (Figur 1) verschließbar.

Das Heckscheibenelement 18 besteht aus einem Heckscheibenrahmen 30 und einer Heckscheibe 32 aus einem transparenten starren Material, im Ausführungsbeispiel aus Glas. Die obere Kante 34 des Heckscheibenelements 18 ist mit der hinteren Kante des Stoffverdecks 28 verbunden. An seiner untere Kante 36 ist das Heckscheibenelement 18 schwenkbar an der Heckpartie 24 der Karosserie 12 befestigt.

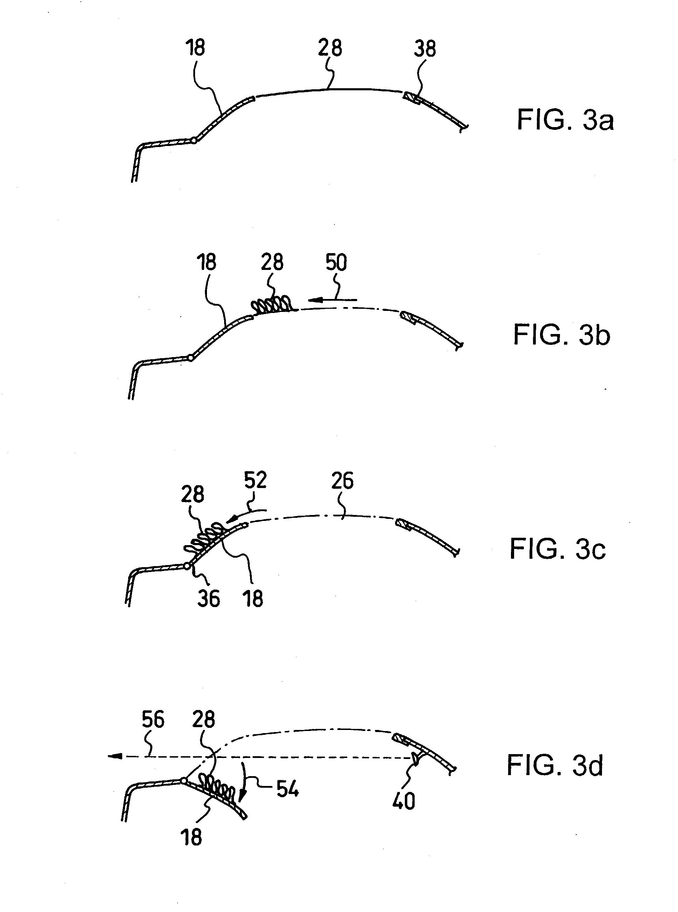

Figur 1 zeigt die viertürige Cabrio-Limousine mit geschlossenem Fahrzeugdach. Der Öffnungsvorgang des Fahrzeugdachs ist in Figur 3 in (a) bis (d) in stark schematisierter Darstellung in vier Arbeitsstellungen dargestellt. Die Situation von Figur 3(a) entspricht dabei der in Figur 1 dargestellten Situation mit geschlossenem Fahrzeugdach.

Beim Öffnen des Fahrzeugdachs schiebt, nach einer Betätigung durch den Fahrer in der Fahrgastzelle 14, zunächst ein nicht gezeigter elektrischer Antrieb das Stoffverdeck 28 von der Oberkante 38 der Frontscheibe entlang des Pfeils 50 zurück und faltet es dabei in an sich bekannter Weise auf (Figur 3(b)). Der Antrieb schiebt dann das gefaltete Stoffverdeck 28 entlang des Pfeils 52 schräg nach unten weiter auf die Außenseite des starren Heckscheibenelements 18, bis es vollständig auf diesem zu liegen kommt. Diese Situation ist in der Figur 3(c) dargestellt. Die Dachöffnung 26 ist nunmehr vollständig freigegeben.

Nun entriegelt der Antrieb das Heckscheibenelement 18 und schwenkt es zusammen mit dem aufgeschobenen Stoffverdeck 28 um seine untere Kante 36 ins Innere der Fahrgastzelle 14, wie durch den Pfeil 54 in Figur 3(d) angezeigt. Dabei wird das Heckscheibenelement soweit nach unten verschwenkt, dass die rückwärtige Blickrichtung 56 des Fahrers über den Rückspiegel 40 nicht versperrt ist. Das Fahrzeugdach ist jetzt einschließlich des zuvor von dem Heckscheibenelement 18 eingenommenen Bereichs vollständig geöffnet.

Die Situation mit vollständig geöffnetem Fahrzeugdach ist in der Figur 2 in einer der Figur 1 entsprechenden perspektivischen Ansicht gezeigt. Dabei ist auch zu erkennen, dass das Heckscheibenelement 18 mit dem aufgeschobenen Verdeck 28 in einen Stauraum 42 hinter den Rücksitzen der Limousine 10 verschwenkt ist.

Es versteht sich, dass zum Schließen des Daches die oben genannten Schritte in umgekehrter Reihenfolge ausgeführt werden. Das heißt, das Heckscheibenelement 18 mit dem aufgeschobenen Verdeck 28 wird aus der Fahrgastzelle 14 hochgeschwenkt, bis es in seiner hochgeklappten Stellung einrastet. Dann schiebt der Antrieb das Verdeck 28 von dem Heckscheibenelement 18 weg nach vorne, bis es die Oberkante 34 des Heckscheibenelements 18 überschreitet. Von dort wird das Verdeck 28 in an sich bekannter Weise über mehrere Spriegel auseinander gefaltet, gestrafft und im Bereich der Oberkante 38 der Frontscheibe 16 an einem quer verlaufenden Dachrahmen in einer nicht näher gezeigten Verschlusseinrichtung in seiner geschlossenen Stellung fixiert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Kraftfahrzeug
- 12: Karosserie
- 14: Fahrgastzelle
- 16: Frontscheibe
- 18: Heckscheibenelement
- 20: Dachlängsholm
- 22: Frontpartie
- 24: Heckpartie
- 26: Dachöffnung
- 28: Stoffverdeck
- 30: Heckscheibenrahmen
- 32: Heckscheibe
- 34: Oberkante des Heckscheibenelements
- 36: Unterkante des Heckscheibenelements
- 38: Oberkante der Frontscheibe
- 40: Rückspiegel
- 42: Stauraum
- 50: Bewegungsrichtungen
- 52: Bewegungsrichtungen
- 54: Bewegungsrichtungen
- 56: rückwärtige Blickrichtung

## Patentansprüche

1. Kraftfahrzeug mit einem zu öffnenden Fahrzeugdach, mit einer Karosserie (12), die eine Fahrgastzelle (14) bildet, die an ihrem vorderen und hinteren Ende von einer Frontscheibe (16) und einem Heckscheibenelement (18) begrenzt wird und an deren Seiten sich vom vorderen zum hinteren Ende karosseriefeste Dachlängsholme (20) erstrecken, wobei die Dachlängsholme (20), eine Oberkante (38) der Frontscheibe (16) und eine Oberkante (34) des Heckscheibenelements (18) eine Dachöffnung (26) einschließen, und mit einem faltbaren Verdeck (28) zum wahlweisen Öffnen und Schließen der Dachöffnung (26), **dadurch gekennzeichnet, dass** das Heckscheibenelement (18) an seiner Oberkante (34) mit dem faltbaren Verdeck (28) verbunden ist und an einer Unterkante (36) um diese Kante (36) schwenkbar an der Karosserie (12) angebracht ist.

2. Kraftfahrzeug nach Anspruch 1, **dadurch gekennzeichnet, dass** das Heckscheibenelement (18) in die Fahrgastzelle (14) schwenkbar ist, bevorzugt dass es in einen hinter Vorderoder Rücksitzen des Fahrzeugs angeordneten Stauraum (42) schwenkbar ist.

3. Kraftfahrzeug nach Anspruch 2, **dadurch gekennzeichnet, dass** ein Antrieb zum Öffnen und Schließen des Fahrzeugdaches vorgesehen ist, der so angeordnet und eingerichtet ist, dass er das faltbare Verdeck (28) beim Öffnen faltet und auf die Außenfläche des Heckscheibenelements (18) schiebt.

4. Kraftfahrzeug nach Anspruch 3, **dadurch gekennzeichnet, dass** der Antrieb angeordnet und eingerichtet ist, um nach Aufschieben des faltbaren Verdecks (28) das Heckscheibenelement (18) zusammen mit dem aufgeschobenen Verdeck (28) in die Fahrgastzelle (14) zu schwenken.

5. Kraftfahrzeug nach einem der Ansprüche 2 bis 4, **dadurch gekennzeichnet, dass** nach einer Verschwenkung des Heckscheibenelements (18) in die Fahrgastzelle (14) die rückwärtige Blickrichtung (56) des Fahrers im Wesentlichen freigegeben ist.

6. Kraftfahrzeug nach einem der vorhergehenden Ansprüche, **dadurch gekennzeichnet, dass** das Heckscheibenelement (18) starr ist.

7. Kraftfahrzeug nach einem der vorhergehenden Ansprüche, **dadurch gekennzeichnet, dass** das Heckscheibenelement (18) einen Heckscheibenrahmen (30) und eine Heckscheibe (32) aus einem transparenten starren Material, insbesondere aus Glas, enthält.

8. Kraftfahrzeug nach einem der vorhergehenden Ansprüche, **dadurch gekennzeichnet, dass** das faltbare Verdeck ein Stoffverdeck (28) ist.

9. Verfahren zum Öffnen eines Fahrzeugdachs eines Kraftfahrzeugs nach einem der vorhergehenden Ansprüche, bei dem das faltbare Verdeck (28) beim Öffnen gefaltet und auf die Außenfläche des Heckscheibenelements (18) geschoben wird, und das Heckscheibenelement (18) mit dem aufgeschobenen Verdeck (28) in die Fahrgastzelle (14) geschwenkt wird, so dass nach der Verschwenkung des Heckscheibenelements (18) die rückwärtige Blickrichtung (56) des Fahrers im Wesentlichen freigegeben wird.

10. Verfahren nach Anspruch 9, bei dem das Falten des Verdecks (28), das Aufschieben auf das Heckscheibenelement (18) und das Schwenken des Heckscheibenelements (18) in die Fahrgastzelle (14) durch einen elektrischen Antrieb bewirkt wird.
